# EUROPEAN PATENT SPECIFICATION

(11) **EP 0 549 064 B1**
(45) Date of publication and mention of the grant of the patent: **30.08.1995**
(21) Application number: 92203994.6
(22) Date of filing: 17.12.1992
(51) Int. Cl.: C08F 8/42, C08F 293/00

(54) **Novel functionalized polyolefins**
Funktionelle Polyolefine
Polyoléfines fonctionnelles

(30) Priority: 20.12.1991 EP 91203390
(43) Date of publication of application: 30.06.1993
(73) Proprietor: SHELL INTERNATIONALE RESEARCH MAATSCHAPPIJ B.V., 2596 HR Den Haag (NL)
(72) Inventor: De Boer, Eric Johannes Maria, NL-1031 CM Amsterdam (NL); Van Der Huizen, Adriaan Albert, NL-1031 CM Amsterdam (NL); Hage, Fred Ferdinand, 2700 AB Zoetermeer (NL); Willis, Carl Lesley, NL-1031 CM Amsterdam (NL)

(56) References cited:
- EP-A- 0 264 214
- DE-A- 1 911 886
- FR-A- 1 525 462

## Description

The present invention relates to novel functionalized polyolefins and more in particular to alkali metal-metallated polyolefins, to a process for the preparation of said polyolefins and to their use.

Organo-alkali metal compounds, such as for example organo-lithium compounds and more in particular alkyl-lithium compounds, are widely used as polymerization initiators in anionic solution polymerization processes.

A well-known class of polymers which can be advantageously prepared by such an anionic polymerization process, are the so-called block copolymers, i.e. linear or branched polymers wherein the polymer molecules are characterized by the presence of at least two polymer blocks which differ in chemical composition and/or configuration. A further feature of said block copolymers is that generally they have a narrow molecular weight distribution. The majority of the commercially available block copolymers are generally at least based on monoalkenylarene and/or conjugated diene type monomers; the use of the latter type of monomer resulting in polymers having olefinically unsaturated polymer blocks.

For a number of applications it would be desirable or advantageous to have block copolymers comprising well-defined saturated polyolefin blocks in addition to for example blocks based on monoalkenylarene and/or conjugated diene type monomers. However, it is known that it is very difficult if not impossible, to prepare such- polymers via the hereinbefore mentioned anionic polymerization process. Such saturated polyolefin block containing polymers can, however, be prepared via an indirect route, i.e. via a selective hydrogenation of block copolymers comprising conjugated diene based blocks.

This approach is not only disadvantageous in that it introduces an additional process step, but moreover it is also known that the commonly used nickel based hydrogenation catalyst is very sensitive to the presence of polar substances. This could, for example, be the case when the block copolymer to be hydrogenated, contains polar entities, such as, for example, a polar polymer block. Finally, such a hydrogenation procedure may also have to be followed by a step for isolating the hydrogenation catalyst at the end of the reaction. A further disadvantage of this procedure is that the type of polyolefin block thus prepared will always be governed by the nature and configuration of the conjugated diene based precursor block, and finally it does not allow the preparation of a block copolymer comprising a saturated polyolefin block and a conjugated diene block.

In JP-A-5 9179 527 a method has been described for the preparation of a propene-styrene derived block copolymer, which comprises reacting a halogenated polypropene with a lithiated polystyryl polymer species obtained by anionic polymerization of styrene. This method has the disadvantage in that it only allows the preparation of diblocks while it furthermore involves the use of halogens or halogen compounds.

In JP-A-6 2054 712 a method has been described for the preparation of modified polyolefins by polymerizing an alpha-olefin in the presence of a Ziegler-Natta catalyst and subsequently reacting said polyolefin with an organo-lithium compound and subsequently copolymerizing the thus prepared polymer with added styrene. The polymerization catalyst in the presence of which the polyolefin is prepared, is a heterogeneous catalyst system, the use of which is known to result in polymers having a very high molecular weight and a wide molecular weight distribution, while only a relatively small percentage of the thus prepared polyolefins will have an olefinically unsaturated group in a terminal segment of the polyolefin molecule. It will be appreciated by those skilled in the art that the metallation of these polyolefins will result in polyolefin compositions wherein only a small percentage of the polyolefins carry an alkali metal atom in a terminal segment of the polyolefin molecule, while the majority of polyolefins will be randomly metallated, including a polymetallated, as well as non-metallated polyolefins. Due to the heterogeneous distribution of the alkali metal atoms, said metallated polyolefin compositions will be of little value as anionic polymerization initiator in the preparation of block copolymers, as it will not result in substantially linear, living polymer containing saturated polyolefin blocks.

In DE-A-1 595 359 an anionic polymerization process for the preparation of block copolymers has been described, wherein the polymerization initiator is based on saturated polyolefins having a K-value of 12-40 and an average molecular weight of 250-50000. As the polymerization initiators mentioned hereinbefore were obtained via metallation of said saturated polyolefins it will be appreciated that the metal atoms will be randomly distributed along the polyolefin chains, and that the metallated polyolefins may include a considerable amount of polymetallated molecules. Hence, the polyolefin blocks of the block copolymers derived therefrom will not be well-defined blocks, while moreover the block copolymer may also vary in composition when the initiator included polymetallated species.

Hence, it can be concluded that there is considerable need for improvement in the preparation of block copolymers containing well-defined saturated polyolefin blocks.

The problem underlying the present invention is to develop a method for the preparation of such block copolymers which does not suffer from one or more of the disadvantages as described hereinbefore.

With the term "well-defined" as used throughout the present specification is meant that the saturated polyolefine blocks have an unbranched backbone and are substantially terminally connected to other blocks.

As a result of extensive research and experimentation, it was surprisingly found that it is possible to prepare block copolymers comprising at least a well-defined saturated polyolefin block in addition to e.g. a monoalkenylarene based polymer block, a conjugated diene based block and/or a block based on a polar monomer, via an anionic polymerization process wherein the organo-alkali metal polymerization initiator is based on selected polyolefins i.e. polyolefins having at least a vinylidene group in a terminal monomer unit-based segment of the polyolefin chain or originating therefrom, as defined hereinafter. Said organo-alkali metal initiators mentioned hereinbefore are novel and form an aspect of the present invention. Said initiators will actually represent polyolefins containing an allyl anion with an alkali metal counter ion and will be referred to as such hereinafter.

Accordingly, the invention provides alkali metal metallated polyolefins based on one or more aliphatic mono alpha-olefins, having a number average molecular weight in the range of from 175 to 250000, and preferably from 1000-50000 and containing an allyl anion with an alkali metal counter ion, wherein the allyl anion is based on a vinylidene group which is contained in a terminal monomer unit of individual polyolefin molecules, or originates therefrom.

In the context of the present invention the term "terminal monomer unit" refers to a terminal segment of the polyolefin molecule or chain, which corresponds with the contribution to that molecule of a single monomer, while the term "or originates therefrom" refers to a vinylidene group which was originally present in a terminal monomer unit of the polyolefin molecule but as a result of e.g. isomerization, occupies a position at a somewhat greater distance from said terminal segment.

The aliphatic monoalpha-olefins from which the metallated polyolefins of the present invention are derived, preferably have 2-18 carbon atoms per molecule and more preferably from 2 to 12 carbon atoms per molecule as exemplified by ethene, propene, butene-1, 3-methylbutene-1, hexene-1 and octene-1. Still more preferably said monoalpha-olefins have 2-4 carbons, propene being the most preferred monoalpha-olefin.

Although the polyolefins as described hereinbefore, include both homo- and copolymers, there is a preference for the polyolefins to be homopolymers. When appropriate, a polyolefin homopolymer may occur in any one of its tacticities (or stereo configurations) such as isotactic, syndiotactic and atactic, the latter configuration being preferred.

The nature of the alkali metal which forms the counter-ion of the allyl anions in the polyolefins of the present invention, is not critical and may be any one of the alkali metals, with a preference for lithium.

The alkali metal-metallated polyolefins of the present invention may conveniently be prepared by metallating suitable polyolefin precursors via known metallating procedures, such as have been described in e.g. L. Brandsma: Preparative Polar Organometallic Chemistry, Vol. 1, Springer Verlag 1987, and idem Vol. 2, Springer Verlag 1990. Said metallation procedure comprises contacting a polyolefin having at least a vinylidene group in a terminal monomer unit of the polyolefin chain as described hereinbefore, with an organo-alkali metal compound in the presence of potassium tertiary butoxide or a tertiary amine, which tertiary amine is preferably a ditertiary amine such as for example tetramethylethylenediamine. Said metallation can be conducted in the presence of one or more inert hydrocarbon solvents, such as for example saturated aliphatic or cycloaliphatic hydrocarbons having from 4 to 20 carbon atoms and preferably from 5 to 10 carbon atoms per molecule, as exemplified by pentane, hexane, heptane, isooctane, cyclopentane, cyclohexane and decane.

It will be appreciated that the amount of solvent employed with respect to the amount of polyolefin to be metallated, will primarily be governed by the molecular weight of said polyolefin and the required viscosity of the polyolefin solution during the metallation reaction. It should, however, be sufficient to facilitate adequate mixing of the reactants and stirring of the reaction mixture. The metallation of the hereinbefore described polyolefins can be conducted under moderate reaction conditions, such as for example a temperature in the range of from -50 to 150 °C, with a high yield. In general at least 70% of the polyolefin molecules thus treated and more typically 95% or more will carry an alkali metal atom.

The precursors of the functionalized polyolefins of the present invention, i.e. polyolefins having a molecular weight in the range of from 175 to 250000 and preferably from 1000 to 50000 and containing at least a vinylidene group in a terminal monomer unit of the polyolefin chain, or originating therefrom, can conveniently be prepared via known technology, i.e. by polymerizing one or more aliphatic monoalpha-olefins in the presence of a homogeneous Ziegler-Natta catalyst, such as has been described for example in Polymer, 1984, Vol. 30, March pp. 428-431.

The polyolefin homo- and/or copolymers prepared in the presence of a homogeneous Ziegler-Natta catalyst, are not only well-defined products in that they are characterized by the presence of a vinylidene group as described hereinbefore in substantially all the polyolefin molecules, but also by having a narrow molecular weight distribution, as indicated by the $\text{Q(=} {\overline{\text{M}}}_{\text{w}} \text{/} {\overline{\text{M}}}_{\text{n}} \text{)}$ value generally being in the range of from 1.8 to 5.0, and sometimes even being as low as 1.1.

Another aspect of the present invention is the use of the polyolefins having at least an allyl anion group with an alkali metal counter ion as described hereinbefore. It will be appreciated that these alkali metal-metallated polyolefins can also be considered to be "high molecular weight" organo-alkali metal compounds and hence could be of potential interest for use instead of low molecular weight organo-alkali metal compounds, such as for example n-butyllithium (n-BuLi).

One of the most well-known outlets for said organo-alkali metal compounds is as polymerization initiator in anionic polymerization processes. It could be confirmed by additional experimentation that the alkali metal-metallated polyolefins of the present invention could indeed be advantageously used as polymerization initiator in an anionic polymerization process for the preparation of block copolymers comprising at least a saturated polyolefin block. The saturated polyolefin blocks of the thus prepared block copolymers, have their origin in the organic part of the polymerization initiator used and will thus have the same characteristics.

In view of the technology employed, said metallated polyolefins of the present invention have become available in solution form, i.e. the reaction mixture of the metallation procedure, which may also comprise any excess metallation reagent, such as for example BuLi. For use as polymerization initiator their availability in solution form is considered to be an advantage as the preparation of the block copolymers as described hereinbefore is generally conducted in the presence of a hydrocarbon solvent, such as of the type wherein the metallated polyolefins may be dissolved. However, before the polymerization initiator can actually be used, any residual metallation reagent has to be removed as it would interfere with the subsequent polymerization. Known selective methods for selectively destroying the residual metallating reagents include thermal and chemical treatment.

Chemical treatment can be carried out by means of ethers as was known from e.g. G. Wilkinson et al, "Comprehensive Organometallic Chemistry", Vol. 1, Pergamon Press 1982, from P.A.A. Klusener, "Synthetic Applications of Strongly Basic Reagents", Thesis R.U.U., 1989, and from the publication of L. Brandsma, to which has been referred hereinbefore. Suitable ether which may be successfully applied for said selective inactivation are selected from tetrahydrofuran,1,4-benzodioxan; 1,2-dimethoxy ethane and diethyl ether.

In particular, tetrahydrofuran has been experienced as being a preferred agent for said chemical treatment, which treatment may comprise stirring the metallated polyolefin containing reaction mixture e.g. at room temperature with an at least equimolar quantity of tetrahydrofuran with respect to that of the organo-alkali metal originally added.

The viscosity of said metallated polyolefin solution is not critical but for sake of convenience should allow easy handling and mixing with other compounds already present in the polymerization mixture.

The saturated polyolefin block containing block copolymers can be prepared via an anionic polymerization procedure, which comprises polymerizing an anionically polymerizable compound in the presence of an organo-alkali metal initiator compound and at least an inert hydrocarbon solvent, wherein the organo-alkali metal initiator compound comprises a polyolefin of the present invention.

The metallated polyolefin initiator may be added to the reactor as a hydrocarbon solvent solution, which solution was conveniently obtained by treating the reaction mixture of the polyolefin metallation procedure as described hereinbefore.

Preferred polymerizable monomers are olefinically unsaturated compounds selected from the group consisting of monoalkylene arenes, conjugated dienes and (meth)acrylic acid based monomers. Preferred monoalkenylarene monomers for use in the preparation of said block copolymers include styrene, alphamethylstyrene and ringsubstituted styrenes, of which styrene being most preferred.

Preferred conjugated dienes contain 4 to 12 carbon atoms and include 1,3-butadiene, isoprene, 2,3-dimethyl-1,3-butadiene, 2-methyl-1,3-pentadiene, 1,3-pentadiene, 2,3-dimethyl-1,3-pentadiene, 2-methyl-3-ethyl-1,3-pentadiene, 2-phenyl-1,3-butadiene, 1,3-hexadiene, 2,4-hexadiene, 1,3-cyclohexadiene and mixtures thereof; 1,3-butadiene, isoprene and mixtures thereof being most preferred.

(Meth)acrylic acid based monomers include alkyl acrylates and methacrylates such as ethyl acrylate, butyl acrylate, methyl methacrylate and tert-butyl methacrylate. Other useful monomers include acrylonitrile, acrylamides, dialkyl-acrylamides and vinyl heterocyclic compounds. Monoalkylenearene and conjugated dienes are the preferred monomers to be used in the process for the preparation of the block copolymers containing at least a saturated polyolefin block.

The amount of metallated polyolefin polymerization initiator to be employed will primarily be determined by the molecular weight of the desired block copolymer. Generally the amount of initiator is in the range of from 1 to 1000 and preferably from 5 to 100 milli-equivalents of alkali metal per 100 g of total monomer. The polymerization is conveniently conducted in the presence of one or more inert solvents and/or diluents. Suitable inert solvents and/or diluents include hydrocarbon compounds such as pentane, hexane, heptane, cyclohexane, benzene, toluene and ethylbenzene; linear or cyclic ethers such as diethyl ether, tetrahydrofuran, dioxane and the dimethyl ether of ethylene glycol.

The amount of solvent and diluent to be employed may vary widely but should preferably be sufficient to keep the viscosity of the reaction medium, low enough to allow adequate stirring. Generally the solvent or diluent will be present in an amount which is sufficient to provide a weight ratio between diluent or solvent and all the monomers added during the polymerization process in the range of from 3:1 to 25:1 and preferably from 5:1 to 10:1.

The preparation of the block copolymers as described hereinbefore is preferably conducted at a temperature in the range of from -20 to 150 °C and more preferably from 20 to 100 °C.

The manner wherein the monomers to be copolymerized are introduced in the reactor varies strongly with the nature of the block copolymer to be prepared. Should the finally desired block copolymer be a two-block copolymer, i.e. a block copolymer comprising a saturated polyolefinic block and attached thereto a second polymer block, the monomer or related monomers required for the preparation of the second block may be added at the beginning of the copolymerization. Should, however, the block copolymer to be prepared during the copolymerisation comprise more than two polymer blocks, the monomer or monomers required for each individual block may be added sequentially.

Should it be desirable, with the preparation of the block copolymers as discussed hereinbefore, to prepare block copolymers having specific polyolefinic blocks, then this can conveniently be accomplished by selecting a metallated polyolefin of the present invention having the required polyolefin characteristics.

The saturated polyolefin blocks containing block copolymers prepared in the presence of the metallated polyolefin initiators described hereinbefore, are novel compounds.

After the desired block copolymer has been prepared the polymerization is terminated. In the context of this specification, the term "termination" refers either to the so-called killing of the living polymer, which means the removal of the active alkali metal with a terminating agent as e.g. water, acid, alcohol, benzaldehyde, hydrogen or trimethyl silicium chloride, or to the coupling of two or more living block copolymers by means of a coupling agent so as to produce a linear or a radially branched product.

Both termination techniques are generally known in the art.

A wide variety of coupling agents, which are known in the art, can be employed, such as multivinylaromatic compounds (e.g. divinylbenzene), multiepoxides, multiisocyanates, multiimines, multialdehydes, multiketones, multianhydrides, multiesters which are the esters of polyalcohols with monocarboxylic acids or esters of polyacids with monohydric alcohols, the diesters which are esters of monohydric alcohols with dicarboxylic acids, monoesters, multihalides, carbon monoxide, carbon dioxide and polyfunctional halogen compounds (e.g. silicon tetrachloride, stannous tetrachloride and dibromoethane). The most preferred coupling agents include the divinyl benzenes, diethyl adipate, silicon tetrachloride and dibromo ethane.

For the purpose of coupling, one equivalent of coupling agent per equivalent of alkali metal is considered an optimum amount for maximum coupling. Any range of treating agent can be employed, depending on the degree of coupling desired. Generally, 0.5 to 1.5 equivalents of coupling agent per equivalent of alkali metal are employed.

The coupling agent can be added neat or alternately added in an inert hydrocarbon solution, such as in cyclohexane. The coupling agent can be added in one batch, incrementally or continuously. The coupling reaction normally is conducted at the same temperature as employed for the polymerisation. The time for the coupling reaction can range from a few minutes to several hours, preferably from 1 min. to 30 min. The reaction mixture is agitated during the coupling reaction.

After the termination of the polymerization the polymer is recovered by methods known in the art. In one suitable method water, steam or alcohol is added to the polymer mixture in order to precipitate the polymer and subsequently the polymer is separated from the alcohol or water and diluent by any suitable means such as decantation or filtration. Advantageously an antioxidant, such as 2,6-di-t-butyl-4-methyl-phenol, may be added to the polymer mixture prior to the precipitation of the polymer. A preferred method to recover the polymer from the solution is steam stripping. Finally, the polymer is dried.

The block copolymers obtained according to the present invention may be compounded by methods known in the art with engineering thermoplastics, fillers, dyes, pigments, softeners and/or reinforcing agents and optionally curing or crosslinking agents. In manufacturing finished articles, the polymer can be moulded or extruded.

In addition to their use for the preparation of block copolymers, the polyolefins of the present invention may also be directly contacted with a coupling agent, e.g. following the procedure as described hereinbefore, to arrive at linear coupled or star-shaped polyolefinic compounds.

Other possible outlets for the metallated polyolefins of the present invention are reactions with alkylene oxides, such as for example ethylene oxide, propylene oxide and butadiene monoxide, as well as with carbon dioxide.

The invention will be further illustrated with the following examples which should, however, not be considered as limiting the scope of the invention or the manner wherein it may be practiced, and for which the following information is provided.
a) General Information
   All experiments were conducted under rigorous exclusion of moisture and air and in an inert atmosphere, e.g. N₂ or Ar, by means of Schlenk techniques or the use of dry-boxes. All glassware used was dried in an oven at 120 °C before use. All solvents were distilled from sodium-benzophenone before use.
b) Preparation of atactic propene oligomers (APO)
   Atactic propene oligomers were prepared by catalytic propene oligomerization with a homogeneous Cp₂ZrCl₂/MAO catalyst. APO of a particular molecular weight can be obtained by tuning catalyst and reaction conditions. Prior to use, the catalyst and solvent were removed from the APO (M̅ₙ = 700) by washing procedures after which the oligomer was dried over freshly cut Na-wire. The very low molecular weight the APO (M̅ₙ = 230) was isolated by vacuum distillation of a crude reaction mixture and collecting the low-boiling components, 180 °C/5mBar.
c) Monomers used
   Styrene and isoprene were of a quality as required in normal anionic polymerization. In the case of a t-butylmethacrylate the stabilizer was removed before use.
d) The following analytical tools and techniques were used to identify the reaction products:
   1) NMR spectra, which were run as CDCl₃ solutions on a Varian or a Bruker apparatus, operating at 200, 300 or 400 mHz;
   2) Molecular weights of the block copolymers were determined with the aid of a gel permeation chromatograph (GPC) calibrated against polystyrene, using tetrahydrofuran as the eluant;
   3) Gas chromatography (GC) was conducted on a Hewlett Packard Series II 5870;
   4) Infrared spectroscopy was conducted on a Digital FTS Qualimatic;
   5) Determination of the degree of metallation.
      The degree of metallation of the APO species was determined by means of the following procedure: Taking the intensely coloured reaction mixture resulting from the reaction of n-BuLi and APO in hexane, it was cooled to -50 °C whereupon, in a single addition, Me₃SiCl was added in a more than equimolar amount with respect to the amount of n-BuLi employed. The temperature of the thus obtained mixture was allowed to increase to room temperature (± 20 °C). After approximately 15 minutes a sufficient amount of water was added and mixed in to effect phase separation, resulting in two clear phases of more or less equal volume. The organic upper layer was separated from the water layer and washed with two portions of water. Subsequently the hexane layer was dried over MgSO₄, filtered, and the volatiles removed under vacuum at 50 °C. A light-yellow viscous oil remained. ¹H- and ¹³C―NMR showed this oil to be an atactic propene oligomer equivalent to the original atactic propene oligomer except for the fact that the vinylidene methyl group was transformed into a ―CH₂SiMe₃ group. The ratio of the former vinylidene methyl group to the new vinylidene ―CH₂SiMe₃ group was taken as a measure for the degree of metallation.

### Preparation of APO⁻Li⁺ containing composition

### Example I

In a 40 ml Schlenkvessel, 1.0 g of APO (M̅ₙ 230, determined by ¹H-NMR) was dissolved in 15 ml of hexane. To this solution 1.1 g of finely powdered KO-t-Bu were added under vigorous stirring. To the resulting white suspension 4.7 ml of a 1.6n solution of n-BuLi in hexane were added. After 4 hours the intensely coloured reaction mixture was cooled to -40 °C and reacted with 1 ml of tetrahydrofuran (THF), and allowed to stir for 30 minutes at room temperature to destroy selectively the excess of n-BuLi. Analysis following the hereinbefore described procedure and for which the coloured reaction mixture before treatment with THF was taken, indicated that more than 97% of the original vinylidene group containing atactic propene oligomer species had been lithiated. No other products resulting from reaction of the atactic propene oligomer could be detected in quantifiable amounts by NMR techniques.

### Example II

The procedure of Example I was repeated with the exception that the APO having a M̅ₙ = 230 was replaced with an APO having a M̅ₙ = 700. Analysis again indicated that more than 97% of the APO species had been lithiated.

### Example III

### Preparation of an APO-polyisoprene diblock copolymer

A solution of lithiated APO as prepared following the procedure as described in Example I and in an amount corresponding with 1 g of APO, was cooled to -40 °C and reacted with 3.0 ml (30 mMol) of isoprene. All isoprene was added in one shot while the reaction mixture was thoroughly stirred and maintained at a temperature below -25 °C. After completion of the addition, the reaction mixture was allowed to warm to room temperature over 30 minutes and stirred for another 2 hours. After this period of time the reaction mixture was cooled to -40 °C, terminated with 1 ml of Me₃SiCl and was subsequently warmed to room temperature during 15 minutes and stirred for another 15 minutes at this temperature. The resulting solution was treated with H₂O. The hexane layer was separated from the water layer and dried over MgSO₄. Hereafter the hexane layer was filtrated to remove the drying agent, the hexane evaporated of and the formed product isolated. Characterization by GPC, NMR, and IR showed the product to be an APO-polyisoprene diblock. GC analyses of the crude reaction solution did not show the presence of APO which was observed in the starting APO material. M̅ₙ isoprene block ≈ 520.

### Example IV

### Preparation of an APO-poly(t-butylmethacrylate) diblock copolymer

The APO-poly(t-butylmethacrylate) diblock copolymer was prepared following the procedure described in Example III with the exception that 14.5 mmol of t-butylmethacrylate replaced the isoprene, and was added to the reactor at -10 °C. After removal of the cooling bath and the reactor temperature had reached room temperature, stirring was continued for 1.5 hours; 1.1 g of benzaldehyde was used instead of Me₃SiCl for termination of the block copolymer, and finally the hexane layer was washed with an aqueous 5% NaHCO₃ solution instead of water. Analysis confirmed the reaction product to be the desired diblock copolymer
M̅ₙ t-butylmethacrylate block ≈ 470.

### Example V

The procedure of Example IV was repeated but employing a lithiated APO solution based on 1 g of APO having a M̅ₙ = 700, as prepared in Example II. Moreover the t-butylmethacrylate was added at -40 °C while stirring at room temperature was conducted during 2 hours, and 0.4 g of benzaldehyde was used for the capping operation. Subsequent to the benzaldehyde addition stirring was continued for 30 minutes. Analysis confirmed the reaction product to be the desired diblock copolymer wherein
M̅ₙ poly(t-butylmethacrylate) block ≈ 450.

### Example VI

### Preparation of an APO-polystyrene diblock copolymer

The procedure of Example V was repeated with the exception that t-butylmethacrylate was replaced with 2 ml of styrene, which was added to the reactor at -78 °C and was followed by stirring at said temperature for 1.5 hours, whereupon the cooling bath was removed and the temperature was allowed to increase to room temperature, at which temperature stirring was continued for 30 minutes. For the capping operation 2 ml of Me₃SiCl was employed instead of benzaldehyde, while water was used for washing the hexane layer. The final analysis confirmed the reaction product to be the desired diblock copolymer. M̅ₙ styrene block ≈ 400.

### Example VII

### Preparation of an APO-polyisoprene-poly(t-butylmethacrylate) triblock copolymer

The procedure of Example III was repeated with the exception that upon completion of the isoprene polymerization step the reaction mixture was again cooled to -40 °C and 14.0 mmol of t-butylmethacrylate was added and mixed in. Subsequently the cooling was removed and the reaction mixture was allowed to reach room temperature. After reaching room temperature, the mixture was stirred for another 1.5 hours, cooled to -40 °C and reacted with 1.1 g of benzaldehyde. Over 30 minutes the reaction mixture was allowed to reach room temperature after which the product was isolated as specified in examples 4 and 5.

Subsequent analysis confirmed the reaction product to be the desired triblock copolymer wherein the M̅ₙ polyisoprene block ≈ 520 and M̅ₙ poly(t-butylmethacrylate) block ≈ 350.

### Example VIII

### Preparation of an APO-poly(isoprene) diblock copolymer

APO (Mₙ = 1500), 2.0 grams (1.3 mMol), were dissolved in dry hexane, 1.1 grams of KO-t-Bu were added and subsequently 4.7 ml of 1.6 n BuLi. The reaction mixture was stirred for 18 hours at room temperature and 5 ml of dry THF were added. The solution was warmed to 35 °C and 20 ml of isoprene were added in one shot. No measures were taken to keep the temperature at 35 °C. After 18 hours reaction the reaction mixture was reacted with 5 ml of Me₃SiCl stirred for 15 minutes, treated twice with water, and dried over anhydrous MgSO₄. After removal of the drying agent by filtration the volatiles were removed under vacuo to afford 16.2 grams of APO-polyisoprene block copolymer.

According to GPC and ¹H-NMR analysis, a diblock copolymer was obtained, containing a polyisoprene block of M̅ₙ = 10000.

### Example IX

### Preparation of a star block copolymer on basis of APO with M̅ₙ = 9000 and divinylbenzene

APO (M̅ₙ = 9000), 2.0 grams (0.22 mMol), were dissolved in dry hexane, 1.1 grams of KO-t-Bu were added and subsequently 4.7 ml of 1.6 n BuLi. The reaction mixture was stirred for 3.5 days at room temperature and 5 ml of dry THF were added. The solution was stirred for 15 minutes and subsequently reacted with 300 mg of divinylbenzene. After additional stirring for 18 hours, the reaction mixture was reacted with Me₃SiCl for 12 hours, washed with water and dried over MgSO₄. After removal of the drying agent by filtration, the volatiles were removed under vacuo to afford 2.1 grams of material, which according to GPC, ¹H-NMR and ¹³CNMR analysis showed the desired structure.

## Claims (Claims for the following Contracting State(s): BE, DE, FR, GB, IT, NL)

1. Alkali metal-metallated polyolefins based on one or more aliphatic monoalpha-olefins, having a number average molecular weight in the range of from 175 to 250000, and preferably from 1000 to 50000 and containing an allyl anion with an alkali metal counter ion, wherein the allyl anion is based on a vinylidene group which is contained in a terminal monomer unit of individual polyolefin molecules, or originates therefrom.

2. Polyolefins as claimed in claim 1, wherein the aliphatic monoalpha-olefins have from 2 to 18 carbon atoms per molecule, and most preferably from 2 to 4.

3. Polyolefins as claimed in claim 1 or 2, wherein the polyolefins are polyolefin homopolymers.

4. Polyolefins as claimed in claim 3, wherein the polyolefin homopolymers are polypropene homopolymers, and preferably atactic polypropene homopolymers.

5. Polyolefins as claimed in any one of claims 1 to 4, wherein the alkali metal counter ion is a lithium counter ion.

6. A process for the preparation of the alkali metal-metallated polyolefins as claimed in claim 1, which comprises contacting a polyolefin having at least a vinylidene group in a terminal monomer unit of the polyolefin chain or originating therefrom, with an organo-alkali metal compound in the presence of potassium tertiary butoxide or a tertiary amine in an inert hydrocarbon solvent.

7. A process for the preparation of block copolymers containing at least a saturated polyolefin block via an anionic polymerization procedure, which comprises polymerizing an anionically polymerizable monomer in the presence of an organo-alkali metal initiator compound and at least an inert solvent, wherein the organo-alkali metal initiator compound comprises a metallated polyolefin as claimed in any one of claims 1-5.

8. A process as claimed in claim 7, wherein the metallated polyolefin initiator is added as a solution in a hydrocarbon solvent.

9. A process as claimed in claim 8, wherein the solution has been obtained by submitting the reaction mixture resulting from the polyolefin metallation procedure to a thermal or chemical treatment to destroy selectively the excess metallating reagent therein.

10. A process as claimed in claim 9, wherein the excess metallating reagent had been destroyed selectively by stirring said solution with an at least equimolar quantity of tetrahydrofuran with respect to that of the organo-alkali metal originally added.

11. A process as claimed in any one of claims 7-10, wherein the polymerizable monomer is an olefinically unsaturated compound selected from the group consisting of monoalkylene arenes, conjugated dienes and (meth)acrylic acid based monomers.

12. A process as claimed in any one of claims 7-10, wherein the polymerization initiator is employed in an amount in the range of from 1 to 1000 milli-equivalents of alkali metal per 100 g of total monomer, and preferably from 5 to 100 milli-equivalents per 100 g of monomer.

13. A process as claimed in any one of claims 7-12, which is conducted at a temperature in the range of from -20 °C to 150 °C, and preferably in the range of from 20 °C to 100 °C.

14. Block copolymers containing at least a saturated polyolefin block prepared according to a process as claimed in any one of claims 7-13.

## Claims (Claims for the following Contracting State(s): ES)

1. A process for the preparation of block copolymers containing at least a saturated polyolefin block via an anionic polymerisation procedure, which comprises polymerising an anionically polymerisable monomer in the presence of an organo-alkali metal initiator compound and at least an inert solvent, wherein the organo-alkali metal initiator compound comprises an alkali metal-metallated polyolefin based on one or more aliphatic monoalpha-olefins, having a number average molecular weight in the range of from 175 to 250,000, and preferably from 1,000 to 50,000, and containing an allyl anion with an alkali metal counter ion, wherein the allyl anion is based on a vinylidene group which is contained in a terminal monomer unit of individual polyolefin molecules, or originates therefrom.

2. Process according to claim 1, wherein the aliphatic monoalpha-olefins have from 2 to 18 carbon atoms per molecule, and most preferably from 2 to 4.

3. Process according to claims 1 or 2, wherein the polyolefins are polyolefin homopolymers.

4. Process according to claim 3, wherein the polyolefin homopolymers are polypropene homopolymers, and preferably atactic polypropene homopolymers.

5. Process according to claims 1 to 4, wherein the alkali metal counter ion is a lithium counter ion.

6. A process as claimed in claims 1-5, wherein the metallated polyolefin initiator is added as a solution in a hydrocarbon solvent.

7. A process as claimed in claim 6, wherein the solution has been obtained by submitting the reaction mixture resulting from the polyolefin metallation procedure to a thermal or chemical treatment to destroy selectively the excess metallating reagent therein.

8. A process an claimed in claim 7, wherein the excess metallating reagent had been destroyed selectively by stirring said solution with an at least equimolar quantity of tetrahydrofuran with respect to that of the organo-alkali metal originally added.

9. A process as claimed in any one of claims 1-8, wherein the polymerisable monomer is an olefinically unsaturated compound selected from the group consisting of monoalkylene arenes, conjugated dienes and (meth)acrylic acid based monomers.

10. A process as claimed in any one of claims 1-9, wherein the polymerisation initiator is employed in an amount in the range of from 1 to 1000 milli-equivalents of alkali metal per 100 g of total monomer, and preferably from 5 to 100 milli-equivalents per 100 g of monomer.

11. A process as claimed in any one of claims 1-10, which is conducted at a temperature in the range of from -20°C to 150°C, and preferably in the range of from 20°C to 100°C.

12. Block copolymers containing at least a saturated polyolefin block prepared according to a process as claimed in any one of claims 1-11.

13. A process for the preparation of the alkali metal-metallated polyolefins as used according to claims 1-11, which comprises contacting a polyolefin having at least a vinylidene group in a terminal monomer unit of the polyolefin chain or originating therefrom, with an organo-alkali metal compound in the presence of potassium tertiary butoxide or a tertiary amine in an inert hydrocarbon solvent.

## Patentansprüche (Patentansprüche für folgende(n) Vertragsstaat(en): BE, DE, FR, GB, IT, NL)

1. Mit Alkalimetall metallierte Polyolefine, basierend auf einem oder mehreren aliphatischen Mono-α-Olefinen, mit einem zahlengemittelten Molekulargewicht im Bereich von 175 bis 250 000, bevorzugt von 1 000 bis 50 000, die ein Allylanion mit einem Alkalimetall-Gegenion enthalten, wobei dem Allylanion eine Vinylidengruppe zugrundeliegt, die in einer endständigen Monomereinheit einzelner Polyolefinmoleküle enthalten ist oder davon herrührt.

2. Polyolefine nach Anspruch 1, wobei die aliphatischen Mono-α-Olefine 2 bis 18, besonders bevorzugt 2 bis 4, Kohlenstoffatome je Molekül aufweisen.

3. Polyolefine nach Anspruch 1 oder 2, wobei es sich bei den Polyolefinen um Polyolefinhomopolymerisate handelt.

4. Polyolefine nach Anspruch 3, wobei es sich bei den Polyolefinhomopolymerisaten um Polypropenhomopolymerisate und bevorzugt um ataktische Polypropenhomopolymerisate handelt.

5. Polyolefine nach einem der Ansprüche 1 bis 4, wobei es sich bei dem Alkalimetall-Gegenion um ein Lithium-Gegenion handelt.

6. Verfahren zur Herstellung der mit Alkalimetall metallierten Polyolefine nach Anspruch 1, bei dem ein Polyolefin, das mindestens eine Vinylidengruppe enthält, die sich in einer endständigen Monomereinheit der Polyolefinkette befindet oder davon herrührt, mit einer alkalimetallorganischen Verbindung in Gegenwart von Kalium-t-Butylat oder eines tertiären Amins in einem inerten Kohlenwasserstofflösungsmittel in Berührung gebracht wird.

7. Verfahren zur Herstellung von Blockcopolymerisaten, die wenigstens einen gesättigten Polyolefinblock enthalten, über ein anionisches Polymerisationsverfahren, bei dem ein anionisch polymerisierbares Monomer in Gegenwart einer alkalimetallorganischen Initiatorverbindung und wenigstens eines inerten Lösungsmittels polymerisiert wird, wobei die alkalimetallorganische Initiatorverbindung ein metalliertes Polyolefin nach einem der Ansprüche 1-5 umfaßt.

8. Verfahren nach Anspruch 7, wobei der metallierte Polyolefininitiator als Lösung in einem Kohlenwasserstofflösungsmittel zugegeben wird.

9. Verfahren nach Anspruch 8, wobei die Lösung dadurch erhalten wurde, daß das durch das Polyolefin-Metallierungsverfahren gebildete Reaktionsgemisch einer thermischen oder chemischen Behandlung unterzogen wurde, um das überschüssige Metallierungsreagens darin gezielt abzubauen.

10. Verfahren nach Anspruch 9, wobei das überschüssige Metallierungsreagens dadurch gezielt abgebaut worden war, daß die Lösung mit einer wenigstens äquimolaren Menge Tetrahydrofuran, bezogen auf das ursprünglich zugegebene Organoalkalimetall, gerührt wurde.

11. Verfahren nach einem der Ansprüche 7-10, wobei es sich bei dem polymerisierbaren Monomer um eine olefinisch ungesättigte Verbindung aus der Reihe der Monoalkylenarene, konjugierten Diene und auf (Meth)acrylsäure basierenden Monomere handelt.

12. Verfahren nach einem der Ansprüche 7-10, wobei der Polymerisationsinitiator in einer Menge im Bereich von 1 bis 1000 Milliäquivalenten Alkalimetall je 100 g an gesamtem Monomer eingesetzt wird, vorzugsweise von 5 bis 100 Milliäquivalenten je 100 g an Monomer.

13. Verfahren nach einem der Ansprüche 7-12, das bei einer Temperatur im Bereich von -20°C bis 150°C, vorzugsweise im Bereich von 20°C bis 100°C durchgeführt wird.

14. Blockcopolymerisate, enthaltend mindestens einen gesättigten Polyolefinblock, hergestellt nach einem Verfahren nach einem der Ansprüche 7-13.

## Patentansprüche (Patentansprüche für folgende(n) Vertragsstaat(en): ES)

1. Verfahren zur Herstellung von Blockcopolymerisaten, die wenigstens einen gesättigten Polyolefinblock enthalten, über ein anionisches Polymerisationsverfahren, bei dem ein anionisch polymerisierbares Monomer in Gegenwart einer alkalimetallorganischen Initiatorverbindung und wenigstens eines inerten Lösungsmittels polymerisiert wird, wobei die alkalimetallorganische Initiatorverbindung ein mit Alkalimetall metalliertes Polyolefin, basierend auf einem oder mehreren aliphatischen Mono-α-Olefinen, mit einem zahlengemittelten Molekulargewicht im Bereich von 175 bis 250 000, bevorzugt von 1 000 bis 50 000, das ein Allylanion mit einem Alkalimetall-Gegenion enthält, umfaßt, wobei dem Allylanion eine Vinylidengruppe zugrundeliegt, die in einer endständigen Monomereinheit einzelner Polyolefinmoleküle enthalten ist oder davon herrührt.

2. Verfahren nach Anspruch 1, wobei die aliphatischen Mono-α-Olefine 2 bis 18, besonders bevorzugt 2 bis 4, Kohlenstoffatome je Molekül aufweisen.

3. Verfahren nach den Ansprüchen 1 oder 2, wobei es sich bei den Polyolefinen um Polyolefinhomopolymerisate handelt.

4. Verfahren nach Anspruch 3, wobei es sich bei den Polyolefinhomopolymerisaten um Polypropenhomopolymerisate und bevorzugt um ataktische Polypropenhomopolymerisate handelt.

5. Verfahren nach den Ansprüchen 1 bis 4, wobei es sich bei dem Alkalimetall-Gegenion um ein Lithium-Gegenion handelt.

6. Verfahren nach den Ansprüchen 1-5, wobei der metallierte Polyolefininitiator als Lösung in einem Kohlenwasserstofflösungsmittel zugegeben wird.

7. Verfahren nach Anspruch 6, wobei die Lösung dadurch erhalten wurde, daß das durch das Polyolefin-Metallierungsverfahren gebildete Reaktionsgemisch einer thermischen oder chemischen Behandlung unterzogen wurde, um das überschüssige Metallierungsreagens darin gezielt abzubauen.

8. Verfahren nach Anspruch 7, wobei das überschüssige Metallierungsreagens dadurch gezielt abgebaut worden war, daß die Lösung mit einer wenigstens äquimolaren Menge Tetrahydrofuran, bezogen auf das ursprünglich zugegebene Organoalkalimetall, gerührt wurde.

9. Verfahren nach einem der Ansprüche 1-8, wobei es sich bei dem polymerisierbaren Monomer um eine olefinisch ungesättigte Verbindung aus der Reihe der Monoalkylenarene, konjugierten Diene und auf (Meth)acrylsäure basierenden Monomere handelt.

10. Verfahren nach einem der Ansprüche 1-9, wobei der Polymerisationsinitiator in einer Menge im Bereich von 1 bis 1000 Milliäquivalenten Alkalimetall je 100 g an gesamtem Monomer eingesetzt wird, vorzugsweise von 5 bis 100 Milliäquivalenten je 100 g an Monomer.

11. Verfahren nach einem der Ansprüche 1-10, das bei einer Temperatur im Bereich von -20°C bis 150°C, vorzugsweise im Bereich von 20°C bis 100°C durchgeführt wird.

12. Blockcopolymerisate, enthaltend mindestens einen gesättigten Polyolefinblock, hergestellt nach einem Verfahren nach einem der Ansprüche 1-11.

13. Verfahren zur Herstellung der mit Alkalimetall metallierten Polyolefine gemäß den Ansprüchen 1-11, bei dem ein Polyolefin, das mindestens eine Vinylidengruppe enthält, die sich in einer endständigen Monomereinheit der Polyolefinkette befindet oder davon herrührt, mit einer alkalimetallorganischen Verbindung in Gegenwart von Kalium-t-Butylat oder eines tertiären Amins in einem inerten Kohlenwasserstofflösungsmittel in Berührung gebracht wird.

## Revendications (Revendications pour l'(les) Etat(s) contractant(s) suivant(s): BE, DE, FR, GB, IT, NL)

1. Des polyoléfines métallées par un métal alcalin à base d'une ou plusieurs mono-alpha-oléfines aliphatiques, ayant un poids moléculaire moyen en nombre compris entre 175 et 250 000, et de préférence entre 1000 et 50 000 et contenant un anion allyle avec un ion complémentaire de métal alcalin, où l'anion allyle est à base d'un groupe vinylidène qui est contenu dans une unité monomère terminale de molécules individuelles de polyoléfine, ou en provient.

2. Des polyoléfines selon la revendication 1, dans lesquelles les mono-alpha-oléfines aliphatiques ont de 2 à 18 atomes de carbone par molécule, et de préférence de 2 à 4.

3. Des polyoléfines selon la revendication 1 ou 2, où les polyoléfines sont des homopolymères d'oléfines.

4. Des polyoléfines selon la revendication 3, dans lesquelles les homopolymères d'oléfines sont des homopolymères de propène, et de préférence des homopolymères atactiques de propène.

5. Des polyoléfines selon l'une quelconque des revendications 1 à 4, dans lesquelles l'ion complémentaire de métal alcalin est un ion complémentaire de lithium.

6. Un procédé pour la préparation des polyoléfines métallées par un métal alcalin selon la revendication 1, qui comprend la mise en contact d'une polyoléfine ayant au moins un groupe vinylidène dans une unité monomère terminale de la polyoléfine ou en provenant, avec un composé organo-métal alcalin en présence de tert-butylate de potassium ou d'une amine tertiaire dans un solvant hydrocarboné inerte.

7. Un procédé pour la préparation de copolymères séquencés contenant au moins un bloc de polyoléfine saturée par une technique de polymérisation anionique, qui comprend la polymérisation d'un monomère polymérisable anioniquement en présence d'un composé organo-métal alcalin comme initiateur et d'au moins un solvant inerte, où le composé organo-métal alcalin utilisé comme initiateur comprend une polyoléfine métallée selon l'une quelconque des revendications 1-5.

8. Un procédé selon la revendication 7, dans lequel l'initiateur polyoléfine métallée est ajouté sous la forme d'une solution dans un solvant hydrocarboné.

9. Un procédé selon la revendication 8, dans lequel la solution a été obtenue en soumettant le mélange de réaction résultant de l'opération de métallation de la polyoléfine a un traitement thermique ou chimique pour détruire sélectivement l'agent de métallation en excès présent.

10. Un procédé selon la revendication 9, dans lequel l'agent de métallation en excès a été détruit sélectivement par agitation de la solution avec une quantité au moins équimolaire de tétrahydrofuranne par rapport à celle du composé organo-métal alcalin ajoutée initialement.

11. Un procédé selon l'une quelconque des revendications 7-10, dans lequel le monomère polymérisable est un composé oléfiniquement insaturé choisi dans le groupe constitué par les monoalcoylène arènes, les diènes conjugués et les monomères à base d'acide acrylique ou méthacrylique.

12. Un procédé selon l'une quelconque des revendications 7-10, dans lequel l'initiateur de polymérisation est utilisé dans une quantité comprise entre 1 et 1000 milli-équivalents de métal alcalin par 100 g de monomère total, et de préférence de 5 à 100 milli-équivalents par 100 g de monomère.

13. Un procédé selon l'une quelconque des revendications 7-12, qui est mis en oeuvre à une température comprise dans l'intervalle de -20°C à 150°C, et de préférence dans l'intervalle de 20°C à 100°C.

14. Des copolymères séquencés contenant au moins un bloc de polyoléfine saturée préparés par un procédé selon l'une quelconque des revendications 7-13.

## Revendications (Revendications pour l'(les) Etat(s) contractant(s) suivant(s): ES)

1. Un procédé pour la préparation de copolymères séquencés contenant au moins un bloc de polyoléfine saturée par une technique de polymérisation anionique, qui comprend la polymérisation d'un monomère polymérisable anioniquement en présence d'un composé organo-métal alcalin comme initiateur et d'au moins un solvant inerte, où le composé organo-métal alcalin utilisé comme initiateur comprend une polyoléfine métallée par un métal alcalin à base d'une ou plusieurs mono-alpha-oléfines aliphatiques, ayant un poids moléculaire moyen en nombre compris entre 175 et 250 000, et de préférence entre 1 000 et 50 000, et contenant un anion allyle avec un ion complémentaire de métal alcalin, où l'anion allyle est à base d'un groupe vinylidène qui est contenu dans une unité monomère terminale de molécules individuelles de la polyoléfine, ou en provient.

2. Un procédé selon la revendication 1, dans lequel les mono-alpha-oléfines aliphatiques ont de 2 à 18 atomes de carbone par molécule, et de préférence de 2 à 4.

3. Un procédé selon les revendications 1 ou 2, dans lequel les polyoléfines sont des homopolymères d'oléfine.

4. Un procédé selon la revendication 3, dans lequel les homopolymères d'oléfine sont des homopolymères de propène, et de préférence des homopolymères atactiques de propène.

5. Un procédé selon les revendications 1-4, dans lequel l'ion complémentaire de métal alcalin est un ion complémentaire de lithium.

6. Un procédé selon les revendications 1-5, dans lequel l'initiateur polyoléfine métallée est ajouté sous la forme d'une solution dans un solvant hydrocarboné.

7. Un procédé selon la revendication 6, dans lequel la solution a été obtenue en soumettant le mélange de réaction résultant de l'opération de métallation de la polyoléfine à un traitement thermique ou chimique pour détruire sélectivement l'agent de métallation en excès présent.

8. Un procédé selon la revendication 7, dans lequel l'agent de métallation en excès a été détruit sélectivement par agitation de la solution avec une quantité au moins équimolaire de tétrahydrofuranne par rapport à celle du composé organo-métal alcalin ajoutée initialement.

9. Un procédé selon l'une quelconque des revendications 1-8, dans lequel le monomère polymérisable est un composé oléfiniquement insaturé choisi dans le groupe constitué par les monoalcoylène arènes, les diènes conjugués et les monomères à base d'acide acrylique ou méthacrylique.

10. Un procédé selon l'une quelconque des revendications 1-9, dans lequel l'initiateur de polymérisation est utilisé dans une quantité comprise entre 1 et 1000 milli-équivalents de métal alcalin par 100 g de monomère total, et de préférence de 5 à 100 milli-équivalents par 100 g de monomère.

11. Un procédé selon l'une quelconque des revendications 1-10, qui est mis en oeuvre à une température comprise dans l'intervalle de -20°C à 150°C, et de préférence dans l'intervalle de 20°C à 100°C.

12. Des copolymères séquencés contenant au moins un bloc de polyoléfine saturée préparés par un procédé selon l'une quelconque des revendications 1-11.

13. Un procédé pour la préparation des polyoléfines métallées par un métal alcalin telles qu'utilisées selon les revendications 1-11, qui comprend la mise en contact d'une polyoléfine ayant au moins un groupe vinylidène dans une unité monomère terminale de la chaîne de polyoléfine ou en provenant, avec un composé organo-métal alcalin en présence de tert-butylate de potassium ou d'une amine tertiaire dans un solvant hydrocarboné inerte.
